# EUROPEAN PATENT APPLICATION

(11) **EP 4 723 750 A1**
(43) Date of publication of application: **08.04.2026**
(21) Application number: 24814499.0
(22) Date of filing: 29.05.2024
(51) Int. Cl.: H04W 52/02

(54) **DATA TRANSMISSION METHOD AND APPARATUS, WAKE-UP SIGNAL MONITORING METHOD AND APPARATUS, TERMINAL, AND DEVICE**

(30) Priority: 01.06.2023 CN 202310648265
(71) Applicant: Vivo Mobile Communication Co., Ltd., Dongguan, Guangdong 523863 (CN)
(72) Inventor: LI, Dongru, Dongguan, Guangdong 523863 (CN); WANG, Lihui, Dongguan, Guangdong 523863 (CN)
(74) Representative: Studio Torta S.p.A.
(86) International application number: PCT/CN2024/096150
(87) International publication number: WO 2024/245302

(57) **Abstract**

This application discloses a data transmission method and apparatus, a wake-up signal monitoring method and apparatus, a terminal, and a device, and pertains to the field of communication technology. The data transmission method according to an embodiment of this application includes: a terminal monitors a first wake-up signal, where the first wake-up signal carries transmission indication information; and the terminal performs a corresponding transmission behavior according to the transmission indication information, where the transmission indication information includes at least one of the following: semi-persistent transmission indication information; and small data transmission indication information.

## Description

### CROSS-REFERENCE TO RELATED APPLICATIONS

This application claims priority to Chinese Patent Application No. 202310648265.1, filed with the China National Intellectual Property Administration on June 1, 2023 and entitled "DATA TRANSMISSION METHOD AND APPARATUS, WAKE-UP SIGNAL MONITORING METHOD AND APPARATUS, TERMINAL, AND DEVICE", which is incorporated herein by reference in its entirety.

### TECHNICAL FIELD

This application pertains to the field of communication technology, and specifically relates to a data transmission method and apparatus, a wake-up signal monitoring method and apparatus, a terminal, and a device.

### BACKGROUND

This application pertains to the field of communication technology, and specifically relates to a data transmission method and apparatus, a wake-up signal monitoring method and apparatus, a terminal, and a device.

### SUMMARY

Embodiments of this application provide a data transmission method and apparatus, a wake-up signal monitoring method and apparatus, a terminal, and a device, to avoid a transmission delay caused by monitoring of a wake-up signal.

According to a first aspect, a data transmission method is provided. The method includes:
a terminal monitors a first wake-up signal, where the first wake-up signal carries transmission indication information; and
the terminal performs a corresponding transmission behavior according to the transmission indication information,
where the transmission indication information includes at least one of the following:
   semi-persistent transmission indication information; and
   small data transmission indication information.

According to a second aspect, a wake-up signal monitoring method is provided. The method includes:
a terminal monitors a wake-up signal during the running of a timer T319a.

According to a third aspect, a data transmission method is provided. The method includes:
a network side device sends a first wake-up signal, where the first wake-up signal carries transmission indication information,
where the transmission indication information includes at least one of the following:
   semi-persistent transmission indication information; and
   small data transmission indication information.

According to a fourth aspect, a data transmission apparatus is provided. The apparatus includes:
a first monitoring module, configured to monitor a first wake-up signal, where the first wake-up signal carries transmission indication information; and
a first execution module, configured to perform a corresponding transmission behavior according to the transmission indication information,
where the transmission indication information includes at least one of the following:
   semi-persistent transmission indication information; and
   small data transmission indication information.

According to a fifth aspect, a wake-up signal monitoring apparatus is provided. The apparatus includes:
a second monitoring module, configured to monitor a wake-up signal during the running of a timer T319a.

According to a sixth aspect, a data transmission apparatus is provided. The apparatus includes:
a first sending module, configured to send a first wake-up signal, where the first wake-up signal carries transmission indication information,
where the transmission indication information includes at least one of the following:
   semi-persistent transmission indication information; and
   small data transmission indication information.

According to a seventh aspect, a terminal is provided, including a processor and a memory, where the memory stores a program or instructions runnable on the processor, and the program or instructions, when executed by the processor, implement the steps of the data transmission method according to the first aspect or the steps of the wake-up signal monitoring method according to the second aspect.

According to an eighth aspect, a network side device is provided, including a processor and a memory, where the memory stores a program or instructions runnable on the processor, and the program or the instructions, when executed by the processor, implement the steps of the data transmission method according to the third aspect.

According to a ninth aspect, a readable storage medium is provided, where the readable storage medium stores a program or instructions, and the program or instructions, when executed by a processor, implement the steps of the data transmission method according to the first aspect, or implement the steps of the wake-up signal monitoring method according to the second aspect, or implement the steps of the data transmission method according to the third aspect.

According to a tenth aspect, a chip is provided, where the chip includes a processor and a communication interface, the communication interface is coupled to the processor, and the processor is configured to run a program or instructions to implement the steps of the data transmission method according to the first aspect, or implement the steps of the wake-up signal monitoring method according to the second aspect, or implement the steps of the data transmission method according to the third aspect.

According to an eleventh aspect, a computer program/program product is provided, where the computer program/program product is stored in a storage medium, and the computer program/program product is executed by at least one processor to implement the steps of the data transmission method according to the first aspect, or implement the steps of the wake-up signal monitoring method according to the second aspect, or implement the steps of the data transmission method according to the third aspect.

According to a twelfth aspect, an electronic device is provided, where the electronic device is configured to perform the steps of the data transmission method according to the first aspect, or implement the steps of the wake-up signal monitoring method according to the second aspect, or implement the steps of the data transmission method according to the third aspect.

**In** the embodiments of this application, transmission indication information related to the semi-persistent transmission and the small data transmission is carried by using the first wake-up signal, so that the terminal does not need to wake up a main communication module to receive related signaling to trigger a transmission process, thereby avoiding an unnecessary delay caused by LP-WUS monitoring, reducing power consumption required for obtaining the indication information related to the semi-persistent transmission and the small data transmission, and improving resource configuration flexibility.

### BRIEF DESCRIPTION OF THE DRAWINGS

To describe the embodiments of this application more clearly, the following briefly describes the accompanying drawings needed in the embodiments. Clearly, the accompanying drawings in the following description show only some embodiments of this application, and a person of ordinary skill in the art may still derive other drawings from these accompanying drawings without creative efforts.
FIG. 1 is a block diagram of a wireless communication system to which an embodiment of this application is applicable;
FIG. 2 is a schematic diagram of a basic operating principle of a low-power wake-up receiver according to an embodiment of this application;
FIG. 3 is a schematic diagram of a time domain pattern of an on-off keying signal according to an embodiment of this application;
FIG. 4 is a schematic diagram of a transmission process of semi-persistent scheduling and uplink configured grant type 2 according to an embodiment of this application;
FIG. 5 is a schematic diagram of a transmission process of uplink configured grant type 1 according to an embodiment of this application;
FIG. 6 is a flowchart of a data transmission method according to an embodiment of this application;
FIG. 7 is a flowchart of a wake-up signal monitoring method according to an embodiment of this application;
FIG. 8 is a flowchart of another data transmission method according to an embodiment of this application;
FIG. 9 is a schematic structural diagram of a data transmission apparatus according to an embodiment of this application;
FIG. 10 is a schematic structural diagram of a wake-up signal monitoring apparatus according to an embodiment of this application;
FIG. 11 is a schematic structural diagram of another data transmission apparatus according to an embodiment of this application;
FIG. 12 is a schematic structural diagram of a communication device according to an embodiment of this application;
FIG. 13 is a schematic diagram of a hardware structure of a terminal according to an embodiment of this application; and
FIG. 14 is a schematic diagram of a hardware structure of a network side device according to an embodiment of this application.

### DETAILED DESCRIPTION

The technical solutions in embodiments of this application are clearly described below with reference to the accompanying drawings in the embodiments of this application. Clearly, the described embodiments are some rather than all of the embodiments of this application. Based on the embodiments of this application, all other embodiments obtained by a person of ordinary skill in the art fall within the protection scope of this application.

The terms such as "first" and "second" in this application are used to distinguish between similar objects and are not intended to describe a specific order or sequence. It should be understood that the terms used in such a way may be interchanged under appropriate circumstances so that the embodiments of this application can be implemented in an order other than those illustrated or described herein, the objects distinguished by "first" and "second" are usually of one type, and the number of objects is not limited. For example, one or more first objects may be provided. In addition, "or" in this application indicates at least one of connected objects. For example, "A or B" covers three schemes, namely scheme 1: including A and excluding B; scheme 2: including B and excluding A; and scheme 3: including both A and B. The character "/" generally indicates an "or" relationship between the associated objects.

The term "indication" in this application may be either a direct indication (or an explicit indication) or an indirect indication (or an implicit indication). The direct indication may be understood as that a sender clearly informs, in an indication sent, a receiver of content such as specific information, an operation needing to be performed, or a request result; and the indirect indication may be understood as that the receiver determines corresponding information or performs determining according to an indication sent by the sender and determines an operation needing to be performed, a request result, or the like according to a determining result.

It should be noted that the technologies described in the embodiments of this application are not limited to a long term evolution (Long Term Evolution, LTE)/LTE-advanced (LTE-Advanced, LTE-A) system, and may be also applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in the embodiments of this application are often used interchangeably, and the described technology can be applied to the systems and radio technologies mentioned above, and can also be applied to other systems and radio technologies. The following describes a new radio (New Radio, NR) system for example purposes, and NR terms are used in most of the following descriptions, but these technologies can also be applied to a system other than the NR system, such as a 6th generation (6^{th} Generation, 6G) communication system.

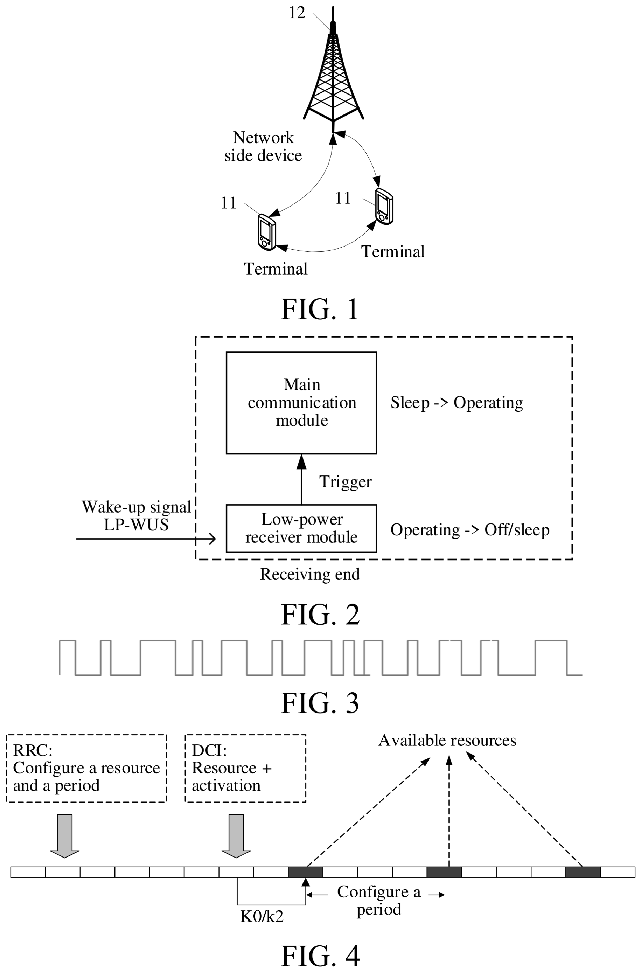

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a household device with a wireless communication function, such as a refrigerator, a television, a washing machine or furniture), a game console, a personal computer (Personal Computer, PC), an automated teller machine, a self-service machine, or another terminal-side device. The wearable device includes a smartwatch, a smart band, a smart headset, smart glasses, smart jewelry (a smart bracelet, a smart chain bracelet, a smart ring, a smart necklace, a smart anklet, a smart ankle chain, or the like), a smart wrist strap, a smart garment, or the like. The vehicle user equipment may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in the embodiment of this application. The network side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or another suitable term in the field as long as the same technical effect is achieved, and the base station is not limited to a specific technical word. It should be noted that in the embodiments of this application, description is provided only by taking the base station in the NR system as an example, and a specific type of the base station is not limited.

To facilitate understanding of the technical solutions provided by this application, the main technical concepts involved in the embodiments of this application are briefly described below.

### I. Low-power receiver

A low-power receiver (namely a low-power wake-up receiver) may also be referred to as an almost zero power receiver (Almost Zero Power Wake Up Radio, AZP-WUR).

As shown in FIG. 2, a basic operating principle of an LP-WUR is that a receiving end (namely a terminal) includes a first module and a second module. The first module is a main communication module configured to send and receive mobile communication data. The second module is a low-power receiver module (also referred to as a low-power wake-up receiver module) configured to receive a wake-up signal.

The terminal in an energy saving state turns on the low-power receiver module to monitor the LP-WUS, and turns off the main communication module. When downlink data arrives, a network sends a wake-up signal to the terminal. After monitoring and obtaining the wake-up signal by using the low-power receiver module, the terminal performs a series of determining and triggers switching of the main communication module from an off state to an on state after the determining is passed. In this case, the low-power receiver module enters an off state from an operating state. The low-power wake-up receiver module may be continuously or discontinuously on. When being on, the low-power wake-up receiver module may receive a low-power wake-up signal.

### II. Low-power wake-up signal

To reduce a receiving activity of a terminal in a standby state and truly turn off a radio frequency (Radio Frequency, RF) module and a baseband (MODEM) module, so as to significantly reduce power consumption of communication reception, a receiver with near-"zero" power may be introduced into a receiver module of the terminal. The receiver with near-"zero" power does not require complex signal detection (such as amplification, filtering, and quantization) of the RF module and signal processing of the MODEM, but only relies on passive matched filtering and signal processing with low power consumption.

On a base station side, a wake-up signal is triggered on demand (on-demand), so that the receiver with near-"zero" power can be activated to learn of an activated notification, to trigger a series of processes in the terminal, for example, turning on a radio frequency transceiver module, a baseband processing module, and the like.

The wake-up signal is usually some relatively simple on-off keying (on-off keying) signals. A time domain pattern of the on-off keying signals is shown in FIG. 3. In this way, the receiver can learn of a wake-up notification through simple energy detection and subsequent possible processes such as sequence detection and recognition. In addition, when the terminal turns on the low-power wake-up receiver to receive the wake-up signal, a main receiver module (namely a main communication module) may maintain operating at a relatively low power consumption level, thereby reducing power consumption by receiving the wake-up signal. Reception of the low-power-consumption wake-up signal may be applied to a terminal in an idle mode (RRC_idle)/inactive mode (RRC_inactive), or may be applied to a terminal in a connected mode (RRC_connected), thereby achieving terminal energy saving.

### III. Downlink semi-persistent scheduling (DownLink Semi Persistent Scheduling, DL SPS) and uplink configured grant (UpLink Configured Grant, UL CG)

### 1. DL SPS

Semi-persistent scheduling physical downlink shared channel (Semi Persistent Scheduling Physical Downlink Shared Channel, SPS PDSCH) transmission is supported in NR Release 15 (Rel-15). The semi-persistent physical downlink shared channel (Semi-persistent PDSCH) refers to PDSCH transmission periodically initiated after a higher layer configures some parameters of DL SPS and activates the parameters by using downlink control information (Downlink Control Information, DCI), and activates downlink SPS transmission. There is no corresponding DCI indication for the PDSCH transmission. The DCI includes a transmission parameter, such as a resource and a modulation and coding scheme (Modulation and Coding Scheme, MCS), of DL SPS transmission. As shown in FIG. 4 (K0/k2 indicates a slot offset), the terminal determines times of DL SPS transmission and frequency resources at corresponding times by receiving the activating DCI. The terminal monitors whether there is corresponding data transmission on a DL SPS resource at each DL SPS time.

### 2. Activation of an SPS PDSCH

The terminal determines whether a physical downlink control channel (Physical Downlink Control Channel, PDCCH) is scheduled to be activated or scheduled to be released according to the following:
cyclic redundancy check (Cyclic Redundancy Check, CRC) corresponding to a DCI format is scrambled by a configured scheduling radio network temporary identifier (Configured Scheduling Radio Network Temporary Identifier, CS-RNTI), and
a new data indicator (New data indicator, NDI) field is 0.

According to some specific fields in DCI format (DCI format), when these fields are all equal to a specific value (such as a specific value shown in Table 1 and indicating that DL SPS activates a PDCCH, or a specific value shown in Table 2 and indicating that the DL SPS releases the PDCCH), the terminal indicates whether the DL SPS activates or releases the PDCCH.

**Table 1**

| | DCI format 1_0 | DCI format 1_1 |
|---|---|---|
| HARQ process number (HARQ process number) | Set to all '0's (set to all '0's) | Set to all '0's (set to all '0's) |
| Redundancy version (Redundancy version) | set to '00' (set to '00') | For the enabled transport block: set to '00' (For the enabled transport block: set to '00') |

**Table 2**

| | DCI format 1_0 |
|---|---|
| HARQ process number (HARQ process number) | Set to all '0's (set to all '0's) |
| Redundancy version (Redundancy version) | Set to '00' (set to '00') |
| Modulation and coding scheme (Modulation and coding scheme) | Set to all '1's (set to all '1's) |
| Frequency domain resource assignment | Set to all '1's |
| (Frequency domain resource assignment) | (set to all '1's) |

To effectively support periodic services of various ultra-reliable low-latency communications (Ultra-Reliable Low-Latency Communications, URLLC) use scenarios (such as power distribution, factory automation, and the transportation industry (including remote driving), DL SPS is enhanced in NR R16. The terminal may configure one or more DL SPS on one or more serving cells, and each DL SPS corresponds to one configuration index. A period of each SPS PDSCH may be as small as one slot. A plurality of simultaneously activated DL SPS configurations help reduce a delay, and provide the terminal with the possibility to support multiple different service types.

It may be understood that, activation and deactivation manners for uplink configured grant type 2 (Configured Grant type 2, CG type 2 or type 2 CG, hereinafter referred to as Type 2 for short) are similar to those of the DL SPS mentioned above, and are not excessively elaborated herein.

### 3. Uplink configured grant type 1 (Configured Grants type 1, CG type 1 or type 1 CG, hereinafter referred to as Type 1 for short)

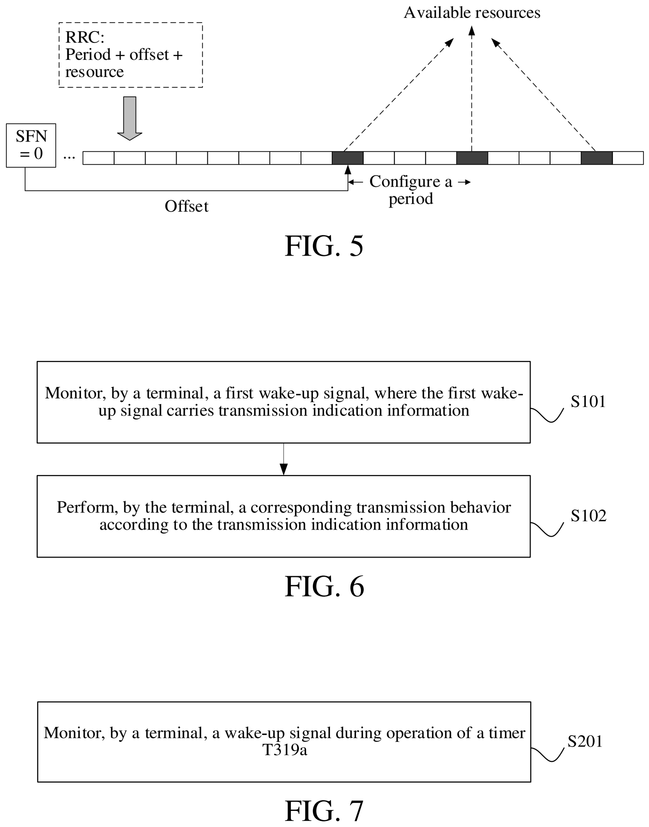

The CG type 1 is to configure all transmission parameters by radio resource control (Radio Resource Control, RRC) signaling, including a period, offset (offset), a resource, activation, and an MCS for possible uplink transmission. The two types (types) differ in that the Configured Grants Type 1 is also configured by RRC, but the Configured Grants Type 1 differs from SPS and Type 2 in that the RRC needs to configure a time-frequency domain resource location in addition to configuring a period. That is, Type 1 does not need to obtain the resource location based on DCI. Specifically, as shown in FIG. 5, the offset is used for controlling a time at which the terminal is allowed for transmission.

However, currently, SPS and UL grant semi-persistent scheduling transmission need to be activated and deactivated through triggering by DCI. In addition, the terminal in a non-RRC connected mode needs to determine whether to perform downlink small data transmission (DownLink Small Data Transmission, DL SDT) by receiving a paging (paging) PDCCH/PDSCH. The two processes need to be triggered by allowing the terminal to receive a corresponding PDCCH. After the LP-WUS is introduced, the terminal uses LP-WUS monitoring to replace PDCCH monitoring to save energy. However, while the PDCCH monitoring is skipped, the above-mentioned two processes need to wait until the terminal resumes the PDCCH monitoring and then receives a corresponding PDCCH before being triggered, resulting in an unnecessary transmission delay.

In addition, currently, for type 1 CG, after configuration information of the type 1 CG is configured on the network side, activation and deactivation of the type 1 CG can only be achieved through RRC reconfiguration. Because a delay of the RRC reconfiguration is more than ten milliseconds, this manner has poor flexibility currently.

In view of the problems existing in the related technology, in this application, activation and deactivation indications of the above-mentioned semi-persistent scheduling, or, a DL SDT transmission trigger indication is carried by using the LP-WUS, to avoid an unnecessary delay caused by LP-WUS monitoring, so that resource configuration flexibility can be improved, and power consumption originally required for triggering the process can be reduced by using the LP-WUS. In addition, the indications of the above-mentioned two processes each require a relatively small number of bits, which has a relatively small impact on LP-WUS transmission performance.

Content provided in embodiments of this application is described in detail below by using some embodiments and application scenarios thereof with reference to the accompanying drawings.

According to a second aspect, FIG. 6 is a flowchart of a data transmission method according to an embodiment of this application. The method may include the following steps:
Step S101: A terminal monitors a first wake-up signal, where the first wake-up signal carries transmission indication information.

During the specific implementation, a network side device may configure the first wake-up signal to indicate identity information of the terminal, to indicate the terminal on which the first wake-up signal acts. For example, the network side device may configure the first wake-up signal to indicate the identity information of the terminal in an implicit or explicit manner.

The implicit manner may include at least one of the following: a data field of the first wake-up signal is scrambled by a radio network temporary identifier (Radio Network Temporary Identifier, RNTI) associated with the terminal or a group common RNTI that may be associated with a plurality of user terminals (associated with at least the current terminal). For example, the network side device scrambles, by using a cell-radio network temporary identifier (Cell-Radio Network Temporary Identifier, C-RNTI) associated with the terminal, a CS-RNTI, a modulation and coding scheme radio network temporary identifier (Modulation and Coding Scheme-Radio Network Temporary Identifier, MCS-RNTI), or the like, the data field of the first wake-up signal acting on the terminal.

In this embodiment, the first wake-up signal may be the above-mentioned low-power wake-up signal.

The explicit manner may include that the first wake-up signal directly carries the identity information, such as identification information, of the terminal.

Step S102: The terminal performs a corresponding transmission behavior according to the transmission indication information.

The transmission indication information includes at least one of the following: semi-persistent transmission indication information; and small data transmission indication information.

During the specific implementation, the terminal may perform a corresponding transmission behavior of semi-persistent transmission or small data transmission according to relevant indication information of the semi-persistent transmission or the small data transmission that is carried in the first wake-up signal, with no need to obtain the relevant indication information by causing a woken-up main communication module to monitor a PDCCH after the first wake-up signal is monitored and obtained, thereby reducing a delay and power consumption.

It may be learned from the above-mentioned steps that, transmission indication information related to the semi-persistent transmission and the small data transmission is carried by using the first wake-up signal, so that the terminal does not need to wake up a main communication module to receive related signaling to trigger a transmission process, thereby avoiding an unnecessary delay caused by LP-WUS monitoring, reducing power consumption required for obtaining the indication information related to the semi-persistent transmission and the small data transmission, and improving resource configuration flexibility.

### Implementation 1

This implementation describes an example in which a first wake-up signal carries semi-persistent transmission indication information (that is, transmission indication information includes the semi-persistent transmission indication information).

In this embodiment, a terminal performs a transmission behavior related to semi-persistent transmission according to the semi-persistent transmission indication information carried in the first wake-up signal. The semi-persistent transmission may include at least one of semi-persistent scheduling transmission and other semi-persistent transmission configured by a higher layer.

The other semi-persistent transmission configured by the higher layer may include, but is not limited to, at least one of the following: a scheduling request (Scheduling Request, SR); periodic channel state information (Channel State Information, CSI); a periodic channel state information-reference signal (Channel State Information-Reference Signal, CSI-RS); and a periodic sounding reference signal (Sounding Reference Signal, SRS). The semi-persistent scheduling transmission may include, but is not limited to, at least one of the following: DL SPS; type 2 CG; and type 1 CG.

Optionally, the semi-persistent transmission indication information is used for indicating at least one of the following:
Item A-1: Activation of semi-persistent transmission. For example, in a case that the terminal receives the semi-persistent transmission indication information for indicating activation of the semi-persistent transmission, the terminal may start the activated semi-persistent transmission. For example, the terminal starts semi-persistent uplink data sending (for example, periodically performing transmission through a physical uplink shared channel) or downlink data reception through an SPS PDSCH.
Item A-2: Deactivation of semi-persistent transmission. For example, in a case that the terminal receives the semi-persistent transmission indication information for indicating deactivation of the semi-persistent transmission, the terminal may deactivate associated semi-persistent transmission, for example, deactivate one or more specific semi-persistent transmission, or deactivate all semi-persistent transmission.
Item A-3: Suspension of semi-persistent transmission. For example, in a case that the terminal receives the semi-persistent transmission indication information for indicating suspension of the semi-persistent transmission, the terminal may suspend (namely suspend) the related semi-persistent transmission. In a possible implementation, configuration information related to the suspended semi-persistent transmission still remains, and after a main receiver of the terminal is switched to an active state (for example, PDCCH monitoring is resumed), the suspended semi-persistent transmission is resumed.
Item A-4: Maintenance of semi-persistent transmission, used for indicating the terminal to maintain a current semi-persistent transmission state.

It should be noted that the current semi-persistent transmission state may be an active state, an inactive state, a suspended state, a paused state, or the like.

Herein, the semi-persistent transmission has the same meaning as a semi-persistent transmission resource configuration and a semi-persistent transmission configuration.

For example, the network side device may configure the first wake-up signal to carry (namely carry) 1 bit of semi-persistent transmission indication information, where "0" indicates deactivation, and "1" indicates activation or suspension. The terminal side determines whether to activate, suspend or deactivate the semi-persistent transmission according to flip of the 1 bit. For example, if a value of a semi-persistent transmission indication currently received by the terminal changes from previous "0" to "1", the terminal determines to activate the semi-persistent transmission. If the value of the semi-persistent transmission indication currently received by the terminal changes from previous "1" to "0", the terminal determines to deactivate the semi-persistent transmission. If there is no state flip, the terminal remains in the current semi-persistent transmission state.

### Implementation 2

This implementation describes an example in which transmission indication information is associated with target transmission.

In this implementation, a network side device may preconfigure one or some target transmission (or target transmission configurations) to be associated with a first wake-up signal, so that transmission indication information carried in the first wake-up signal is used for the target transmission. For example, the first wake-up signal directly indicates the terminal to activate or deactivate the associated target transmission configuration. In this case, the transmission indication information does not need to include related specific configuration information such as index information of the above-mentioned transmission configuration, thereby saving more bits and avoiding carrying a large amount of transmission configuration information in the first wake-up signal, which otherwise would degrade detection performance and coverage performance of the first wake-up signal, and the like.

The target transmission may include at least one of transmission with a specific priority and transmission with a specific configuration index. The target semi-persistent transmission is taken as an example. In this case, the target semi-persistent transmission includes at least one of semi-persistent transmission with a specific priority and semi-persistent transmission with a specific configuration index.

The transmission indication information may further include at least one of the following:
Item B-1: Indication information of a transmission direction, used for indicating a transmission direction (uplink or downlink) of the target transmission (for example, the semi-persistent transmission) associated with the first wake-up signal. For example, the network side device configures the first wake-up signal to carry 1 bit of indication information to indicate whether the currently activated or deactivated semi-persistent transmission is an uplink or a downlink, where "0" indicates that the semi-persistent transmission direction is an uplink, namely for uplink semi-persistent scheduling transmission (for example, type 2 CG), and "1" indicates that the semi-persistent transmission direction is a downlink, namely for downlink semi-persistent scheduling transmission SPS.
Item B-2: Transmission configuration index information, namely index information corresponding to the target transmission associated with the first wake-up signal. For example, semi-persistent scheduling configuration index information (ConfiguredGrantConfigIndex or by sps-ConfigIndex) is used for indicating a semi-persistent scheduling configuration of associated semi-persistent transmission, so that a terminal determines, according to the index information, a semi-persistent transmission configuration that needs to be activated or deactivated.

For example, the network side device configures the first wake-up signal to carry 2 bits of semi-persistent transmission configuration index information, to indicate semi-persistent transmission configurations with four different indexes. For example, "00" corresponds to a semi-persistent transmission configuration index of 0, "11" corresponds to a semi-persistent transmission configuration index of 3, and so on. Alternatively, the network side device configures a corresponding index for each code point (codepoint). For example, "00" corresponds to a semi-persistent transmission configuration index of 0, "01" corresponds to semi-persistent transmission configuration indexes of 0 and 1, "10" corresponds to semi-persistent transmission configuration indexes of 0, 1, and 2, and "11" corresponds to all indexes of the semi-persistent transmission configuration.

Item B-3: Indication information of a transmission time-frequency resource, used for indicating a time-frequency resource needed for target transmission.

Item B-4: Indication information of a transmission parameter, used for indicating a transmission parameter needed for target transmission, for example, an MSC, a PUCCH resource indication, or a PDSCH-to-HARQ feedback timing indicator (PDSCH-to-HARQ_feedback timing indicator, namely an indication of k1).

For example, the first wake-up signal may be associated with a specific semi-persistent scheduling configuration (namely target semi-persistent transmission). The terminal may determine, according to the transmission indication information of the first wake-up signal, to activate or deactivate the semi-persistent scheduling configuration associated with the first wake-up signal.

For example, if the network side device configures a semi-persistent scheduling configuration with a specific index (for example, an ID of 3) to be associated with the first wake-up signal, when detecting the first wake-up signal, the terminal determines to activate or deactivate the semi-persistent scheduling configuration with the ID of 3 according to the transmission indication information carried in the first wake-up signal.

Optionally, the first wake-up signal may be used for indicating all semi-persistent scheduling configurations associated with the first wake-up signal, or one or some specific semi-persistent scheduling configurations, to indicate a range of semi-persistent scheduling configurations controlled by the first wake-up signal. The specific semi-persistent scheduling configuration includes a semi-persistent scheduling configuration with a specific configuration priority, or a semi-persistent scheduling configuration with a specific configuration index. For example, the first wake-up signal may be used for indicating activation of semi-persistent scheduling configurations with configuration indexes of 1, 2, and 3, or used for indicating deactivation of semi-persistent scheduling configurations with priorities of 1, 2, and 3. It may be understood that information, such as a priority, of the semi-persistent scheduling configuration may be preconfigured for the terminal by a network.

In a possible implementation, if the first wake-up signal received by the terminal carries no semi-persistent scheduling configuration index information, and has no associated semi-persistent scheduling configuration, the terminal may be understood as that the first wake-up signal indicates activation or deactivation of all associated semi-persistent scheduling configurations. That is, in a case that the first wake-up signal carries no index information of a semi-persistent scheduling configuration, and the first wake-up signal is associated with no semi-persistent scheduling configuration, the terminal activates or deactivates all semi-persistent scheduling configurations associated with the first wake-up signal.

### Implementation 3

This implementation describes an example in which semi-persistent transmission is configured for a terminal. In this implementation, transmission indication information includes at least semi-persistent transmission indication information, and there may be the following two configuration manners according to different configuration opportunities.

Manner 1: Before monitoring a first wake-up signal, the terminal may first obtain semi-persistent transmission configuration information. That is, a network side device preconfigures a related resource and parameter required for the semi-persistent transmission for the terminal, so that the first wake-up signal may carry an identifier of a semi-persistent transmission configuration (such as semi-persistent scheduling configuration index information) only, and does not need to carry specific configuration information of the semi-persistent transmission. This can reduce the number of bits required by the first wake-up signal to indicate a semi-persistent transmission process, thereby further reducing an impact on transmission performance of an LP-WUS.

The semi-persistent transmission configuration information may include at least one of the following: index information of the semi-persistent transmission; time-frequency resource configuration information of the semi-persistent transmission; priority information of the semi-persistent transmission; and transmission parameter configuration information of the semi-persistent transmission.

It may be understood that in a case that the semi-persistent transmission includes semi-persistent scheduling transmission (correspondingly, the semi-persistent transmission indication information includes at least semi-persistent scheduling transmission indication information), the semi-persistent transmission configuration information may include at least one of the following: index information of the semi-persistent scheduling transmission; time-frequency resource configuration information of the semi-persistent scheduling transmission; priority information of the semi-persistent scheduling transmission; and transmission parameter configuration information of the semi-persistent scheduling transmission.

In the above-mentioned manner 1, the network side device may configure the terminal to activate, deactivate, suspend, or maintain existing semi-persistent transmission configuration information according to the indication of the first wake-up signal. In this case, the first wake-up signal only needs to carry a small number of bits of indication information. This can avoid carrying a large amount of semi-persistent transmission configuration information in the wake-up signal, which otherwise would degrade detection performance and coverage performance of the wake-up signal, and the like.

Manner 2: The network side device may alternatively directly configure a resource or parameter required for semi-persistent transmission for the terminal by using the first wake-up signal. That is, the first wake-up signal may also be used for indicating a resource or a parameter for associated semi-persistent transmission.

In a possible implementation, in a case that the transmission indication information includes at least semi-persistent transmission indication information, the transmission indication information may further include at least one of the following: indication information of a time-frequency resource related to semi-persistent transmission, used for indicating a time-frequency resource required for the semi-persistent transmission; and indication information of a transmission parameter related to the semi-persistent transmission, used for indicating a transmission parameter required for the semi-persistent transmission, and the like.

### Implementation 4

This implementation describes an example in which a first wake-up signal is used for indicating whether transmission indication information is valid. There may be two manners according to different indication manners.

Manner 1: A network side device configures the first wake-up signal to indicate, in an implicit manner, whether the transmission indication information is valid (that is, a terminal determines, according to a target condition, whether the transmission indication information is valid). It may be understood that whether the transmission indication information is valid refers to whether the first wake-up signal is used for indicating the transmission indication information. For example, if the transmission indication information is valid, the first wake-up signal is used for indicating the transmission indication information, or if the transmission indication information is invalid, the first wake-up signal is not used for indicating the transmission indication information.

During the specific implementation, the implicit indication manner may include: transmission indication information carried in the first wake-up signal is valid in a case that the first wake-up signal meets the target condition. That is, the first wake-up signal may be used for indicating activation or deactivation of semi-persistent transmission.

The first condition may include at least one of the following:
Item C-1: A data field of the first wake-up signal is scrambled by a specific RNTI, for example, an RNTI such as a CS-RNTI that may be used for uniquely identifying a terminal.
Item C-2: The specific information field of the first wake-up signal has a specific value. For example, for 2-bit information in a short message indication field of the first wake-up signal, a value of the 2-bit information being "11" indicates that transmission indication information carried in or associated with the first wake-up signal is valid, and another value of the 2-bit information indicates that the transmission indication information is invalid. That the transmission indication information is invalid refers to that the first wake-up signal cannot be used for the transmission indication (namely a transmission indication such as activation or deactivation).
Item C-3: The first wake-up signal includes a specific sequence. For example, if the first wake-up signal includes a specific sequence "0010", it indicates that transmission indication information carried in the first wake-up signal is valid. Optionally, if the first wake-up signal includes no specific sequence, it indicates that transmission indication information carried in the first wake-up signal is invalid.

Manner 2: The network side device configures the first wake-up signal to indicate, in an explicit manner, whether the transmission indication information is valid (that is, the terminal determines whether the transmission indication information is valid according to the indication information carried in the first wake-up signal and used for indicating whether the transmission indication information is valid).

During the specific implementation, the explicit indication manner may include: the network side device adds, in the first wake-up signal, a corresponding bit for indicating whether the transmission indication information is valid (namely indication information on whether the transmission indication information is valid). For example, the network side device adds, in the first wake-up signal, 1 bit of indication information for indicating whether the transmission indication information is valid.

In Implementation 4, the first wake-up signal is used for indicating whether the transmission indication information is valid. In a case that the transmission indication information is valid, the terminal performs a corresponding transmission behavior according to the transmission indication information. For example, when learning, by parsing the first wake-up signal, that the transmission indication information is valid, the terminal may further parse an information field related to the transmission indication information of the first wake-up signal, to obtain indication information such as an activation or deactivation indication of semi-persistent transmission or an SDT indication, and perform a corresponding transmission behavior. In a case that the transmission indication information is invalid, the first wake-up signal does not have a function of indicating related processes of the above-mentioned semi-persistent transmission and SDT. However, in this case, the first wake-up signal can still have another function other than this function, for example, a function of triggering PDCCH monitoring.

In a possible implementation, the terminal performs a default terminal behavior in a case that the transmission indication information is invalid, where the default terminal behavior may include at least one of the following: maintaining the semi-persistent transmission; suspending the semi-persistent transmission; activating the semi-persistent transmission; deactivating the semi-persistent transmission; skipping starting small data transmission; and skipping triggering the small data transmission.

### Implementation 5

This implementation describes an example in which a first wake-up signal is used for indicating transmission indication information. There may be two manners according to different indication manners.

Manner 1: A network side device configures the first wake-up signal to carry the transmission indication information in an implicit manner.

The implicit manner may include at least one of the following: reusing an existing information field in the first wake-up signal, to enable the existing information field to have a function of carrying the transmission indication information; and setting the existing information field in the first wake-up signal to a specific value for indicating the transmission indication information.

During the specific implementation, at least one of the transmission indication information such as an indication on activation or deactivation of the semi-persistent transmission, an indication of a transmission direction, and an indication of a semi-persistent transmission configuration index may be implemented by reusing the existing information field in the first wake-up signal.

For example, if the network side device configures the first wake-up signal to indicate that the transmission indication information is valid, and it is expected that the first wake-up signal is used for activating or deactivating semi-persistent transmission, at least one of information such as activation or deactivation of semi-persistent transmission, a transmission direction, and a semi-persistent transmission configuration index can be indicated by reusing the existing information field in the first wake-up signal. For example, if the existing information field in the first wake-up signal occupies 8 bits, after a function of activating or deactivating the semi-persistent transmission is reused, one bit is used for indicating activation or deactivation of the semi-persistent transmission, another bit is used for indicating a transmission direction, and the remaining bits are used for indicating an index number of a semi-persistent transmission configuration.

It should be noted that the above-mentioned reuse of the existing information field refers to that the original information field is used for another function, but is suspended from being used for the another function in a case (for example, in a case that the transmission indication information including at least semi-persistent transmission indication information is valid), and is used for the function of activating or deactivating the semi-persistent transmission.

Manner 2: A network side device configures the first wake-up signal to carry the transmission indication information in an explicit manner.

The explicit manner may include: adding a corresponding bit of transmission indication information in the first wake-up signal (that is, adding a transmission indication information field).

### Implementation 6

This implementation describes an example in which a first wake-up signal carries SDT-related indication information.

In an embodiment, small data transmission indication information is used for indicating at least one of the following: triggering of small data transmission; paging of the small data transmission; starting of the small data transmission; activation of the small data transmission; and deactivation of the small data transmission.

Herein, the above-mentioned small data transmission has the same meaning as a small data transmission resource configuration and a small data transmission configuration.

After receiving the first wake-up signal carrying the small data transmission indication information, the terminal performs a corresponding transmission behavior according to the small data transmission indication information. For example, in a case that the terminal detects that the first wake-up signal indicates that there is SDT paging currently, a corresponding behavior performed by the terminal includes at least one of sending a common control channel (Common Control Channel, CCCH) and starting a timer T319a.

It may be understood that after an LP-WUS (namely the first wake-up signal) carries an SDT indication (such as an SDT trigger indication, an SDT requirement indication, or an SDT paging indication), the terminal may know whether there is SDT paging, so as to trigger a CCCH-related request in time, and start the timer T319a for small data (small data) scheduling and monitoring. Therefore, after monitoring and obtaining the LP-WUS, the terminal does not need to receive a paging message to learn whether there is SDT paging currently, thereby further reducing a data transmission delay, and reducing corresponding power consumption of paging detection.

In a possible implementation, a network side device may configure the first wake-up signal to carry 1 bit of small data transmission indication information. For example, "0" indicates that there is no SDT requirement currently (that is, the first wake-up signal does not indicate triggering, paging, or starting of the small data transmission), and "1" indicates that there is an SDT requirement currently (that is, the first wake-up signal indicates triggering, paging, or starting of the small data transmission).

During the specific implementation, in a case that the terminal detects the first wake-up signal, and the small data transmission indication information carried in the first wake-up signal indicates triggering the small data transmission, the terminal may perform at least one of the following behaviors:
item D-1: sending at least one of a CCCH, a configured grant (Configured Grant, CG), and a random access channel (Random Access Channel, RACH);
item D-2: starting a timer T319a; and
item D-3: starting downlink reception of at least one of a second wake-up signal, a PDCCH, and a PDSCH.

The second wake-up signal may be a wake-up signal with an information domain or a function different from that of the first wake-up signal. For example, the second wake-up signal may be a wake-up signal for waking up the terminal for PDCCH reception. The triggering of small data transmission may be at least one of the following: paging of the small data transmission; starting of the small data transmission; and activation of the small data transmission.

In an embodiment, indication information of a small data transmission resource configuration may include at least one of the following: an activation indication of the small data transmission resource configuration; and a deactivation indication of the small data transmission resource configuration. For example, the first wake-up signal may carry indication information on activation or deactivation of SDT transmission. Whether specific small data transmission is performed according to semi-persistent scheduling transmission or dynamic scheduling transmission is not specifically limited.

In Implementation 6, the transmission indication information includes at least the small data transmission indication information. Before monitoring the first wake-up signal, the terminal may first obtain the small data transmission configuration information. For example, the network side device pre-sends resource configuration information of small data transmission to the terminal, to avoid bit occupation of the first wake-up signal by the resource configuration information.

### Implementation 7

This implementation describes an example in which an LP-WUS is monitored.

In this embodiment, a terminal monitors a wake-up signal during the running of a timer T319a.

In an embodiment, in a case that the terminal detects the wake-up signal, the terminal resumes or starts physical downlink control channel PDCCH monitoring, or in a case that the terminal detects the wake-up signal and the wake-up signal indicates waking up the terminal, the terminal resumes or starts physical downlink control channel PDCCH monitoring, so that the terminal can still monitor the LP-WUS during the running of the timer T319a, to replace monitoring of the SDT PDCCH. This avoids relatively high power consumption caused when the terminal keeps monitoring the SDT PDCCH by using a main receiver after the timer T319a is started, thereby further implementing energy saving.

In this embodiment, a monitoring periodicity of the wake-up signal may be configured by a network side or agreed on by a protocol. Optionally, the monitoring periodicity of the wake-up signal is less than or equal to a monitoring periodicity of a specific wake-up signal.

In an embodiment, the wake-up signal monitored by the terminal during the running of the timer T319a is a first wake-up signal carrying transmission indication information. The transmission indication information includes at least one of the following: semi-persistent transmission indication information; and small data transmission indication information.

It may be understood that, the terminal monitors the first wake-up signal during the running of the timer T319a instead of monitoring the PDCCH that indicates semi-persistent transmission or an SDT-related process, so that resource configuration flexibility can be improved, and power consumption required for triggering the above-mentioned process is reduced by using the LP-WUS.

According to a second aspect, FIG. 7 is a flowchart of a wake-up signal monitoring method according to an embodiment of this application. The method may include the following steps:
Step S201: A terminal monitors a wake-up signal during the running of a timer T319a.

In a possible implementation, the method further includes at least one of the following:
the terminal resumes or starts physical downlink control channel PDCCH monitoring in a case that the terminal detects the wake-up signal; and
the terminal resumes or starts physical downlink control channel PDCCH monitoring in a case that the terminal detects the wake-up signal and the wake-up signal indicates waking up the terminal.

In a possible implementation, a monitoring periodicity of the wake-up signal is less than or equal to a monitoring periodicity of a specific wake-up signal.

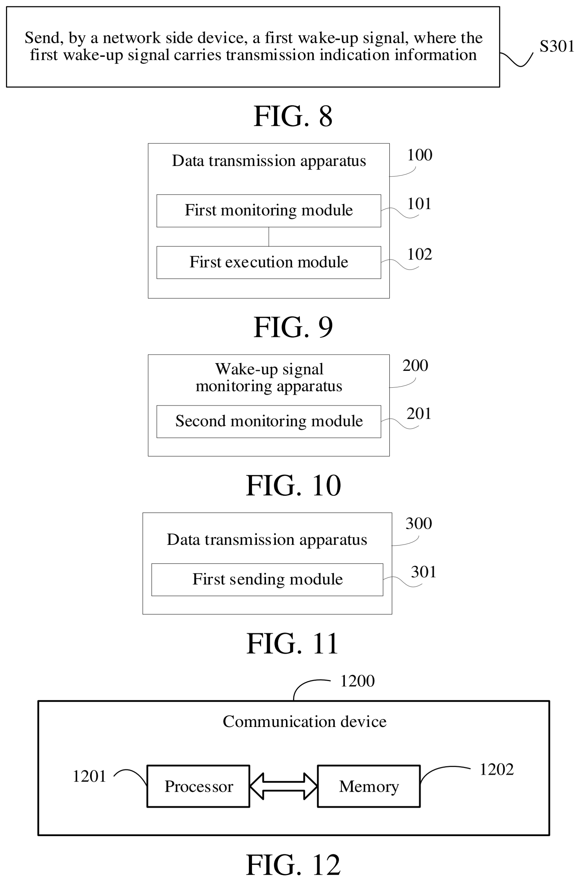

According to a third aspect, FIG. 8 is a flowchart of another data transmission method according to an embodiment of this application. The method may include the following steps:
Step S301: A network side device sends a first wake-up signal, where the first wake-up signal carries transmission indication information.

The transmission indication information includes at least one of the following:
semi-persistent transmission indication information; and
small data transmission indication information.

In a possible implementation, the semi-persistent transmission indication information is used for indicating at least one of the following:
activation of semi-persistent transmission;
deactivation of the semi-persistent transmission;
suspension of the semi-persistent transmission; and
maintenance of the semi-persistent transmission.

In a possible implementation, the small data transmission indication information is used for indicating at least one of the following:
triggering of small data transmission;
paging of the small data transmission;
starting of the small data transmission;
activation of the small data transmission; and
deactivation of the small data transmission.

In a possible implementation, the transmission indication information includes at least the semi-persistent transmission indication information; and the method further includes:

The network side device sends semi-persistent transmission configuration information.

In a possible implementation, the semi-persistent transmission configuration information includes at least one of the following:
index information of the semi-persistent transmission;
time-frequency resource configuration information of the semi-persistent transmission;
priority information of the semi-persistent transmission; and
transmission parameter configuration information of the semi-persistent transmission.

In a possible implementation, the transmission indication information includes at least the small data transmission indication information; and the method further includes:
the network side device sends small data transmission configuration information.

In a possible implementation, the transmission indication information further includes at least one of the following:
indication information of a transmission direction;
transmission configuration index information;
indication information of a transmission time-frequency resource; and
indication information of a transmission parameter.

In a possible implementation, whether the transmission indication information is valid is indicated by at least one of the following:
indication information carried in the first wake-up signal and used for indicating whether the transmission indication information is valid; and
a target condition,
where the target condition includes at least one of the following:
a data field of the first wake-up signal is scrambled by a specific radio network temporary identifier RNTI;
a specific information field of the first wake-up signal is a specific value; and
the first wake-up signal includes a specific sequence.

In a possible implementation, in a case that the small data transmission indication information carried in the first wake-up signal indicates triggering the small data transmission, the network side device performs at least one of the following behaviors:
receiving at least one of a common control channel CCCH, a configured grant CG, and a random access channel RACH; and
sending at least one of a second wake-up signal, a physical downlink control channel PDCCH, and a physical downlink shared channel PDSCH,
where the second wake-up signal is used for waking up a terminal for PDCCH reception.

In a possible implementation, the first wake-up signal is associated with target transmission, and the transmission indication information is used for the target transmission, where target semi-persistent transmission includes at least one of semi-persistent transmission with a specific priority and semi-persistent transmission with a specific configuration index.

In a possible implementation, the first wake-up signal carries identity information of the terminal, or a data field of the first wake-up signal is scrambled by an RNTI associated with the terminal or a group common RNTI.

In a possible implementation, the semi-persistent transmission includes at least one of the following:
semi-persistent scheduling transmission;
a scheduling request SR;
periodic channel state information CSI;
a periodic channel state information reference signal CSI-RS; and
a periodic sounding reference signal SRS.

In a possible implementation, the semi-persistent scheduling transmission includes at least one of the following:
downlink semi-persistent scheduling DL SPS;
uplink configured grant type 2 type 2 CG; and
uplink configured grant type 1 type 1 CG.

The data transmission method and the wake-up signal monitoring method according to the embodiments of this application may be performed by a data transmission apparatus and a wake-up signal monitoring apparatus. In embodiments of this application, the data transmission apparatus and the wake-up signal monitoring apparatus according to the embodiments of this application are described with an example in which the data transmission apparatus and the wake-up signal monitoring apparatus perform the data transmission method and the wake-up signal monitoring method.

According to a fourth aspect, an embodiment of this application provides a data transmission apparatus. The apparatus is implemented by a terminal. As shown in FIG. 9, the data transmission apparatus 100 includes:
a first monitoring module 101, configured to monitor a first wake-up signal, where the first wake-up signal carries transmission indication information; and
a first execution module 102, configured to perform a corresponding transmission behavior according to the transmission indication information,
where the transmission indication information includes at least one of the following:
   semi-persistent transmission indication information; and
   small data transmission indication information.

Optionally, the semi-persistent transmission indication information is used for indicating at least one of the following:
activation of semi-persistent transmission;
deactivation of the semi-persistent transmission;
suspension of the semi-persistent transmission; and
maintenance of the semi-persistent transmission.

Optionally, the small data transmission indication information is used for indicating at least one of the following:
triggering of small data transmission;
paging of the small data transmission;
starting of the small data transmission;
activation of the small data transmission; and
deactivation of the small data transmission.

Optionally, the transmission indication information includes at least the semi-persistent transmission indication information; and the apparatus further includes:
a first obtaining module, configured to obtain semi-persistent transmission configuration information.

Optionally, the semi-persistent transmission configuration information includes at least one of the following:
index information of the semi-persistent transmission;
time-frequency resource configuration information of the semi-persistent transmission;
priority information of the semi-persistent transmission; and
transmission parameter configuration information of the semi-persistent transmission.

Optionally, the transmission indication information includes at least the small data transmission indication information; and the apparatus further includes:
a second obtaining module, configured to obtain small data transmission configuration information.

Optionally, the transmission indication information further includes at least one of the following:
indication information of a transmission direction;
transmission configuration index information;
indication information of a transmission time-frequency resource; and
indication information of a transmission parameter.

Optionally, the first execution module 102 includes:
a first execution submodule, configured to perform the corresponding transmission behavior according to the transmission indication information in a case that the transmission indication information is valid.

Optionally, the apparatus further includes:
a second execution module, configured to perform a default terminal behavior in a case that the transmission indication information is invalid, where the default terminal behavior includes at least one of the following:
maintaining the semi-persistent transmission;
suspending the semi-persistent transmission;
activating the semi-persistent transmission;
deactivating the semi-persistent transmission;
skipping starting the small data transmission; and
skipping triggering the small data transmission.

Optionally, the apparatus further includes:
a first determining module, configured to determine whether the transmission indication information is valid according to at least one of the following:
indication information carried in the first wake-up signal and used for indicating whether the transmission indication information is valid; and
a target condition,
where the target condition includes at least one of the following:
   a data field of the first wake-up signal is scrambled by a specific radio network temporary identifier RNTI;
   a specific information field of the first wake-up signal is a specific value; and
   the first wake-up signal includes a specific sequence.

Optionally, the first execution module 102 includes:
a second execution submodule, configured to perform at least one of the following behaviors in a case that the terminal detects the first wake-up signal, and the small data transmission indication information carried in the first wake-up signal indicates triggering the small data transmission:
sending at least one of a common control channel CCCH, a configured grant CG, and a random access channel RACH;
starting a timer T319a; and
starting downlink reception of at least one of a second wake-up signal, a physical downlink control channel PDCCH, and a physical downlink shared channel PDSCH,
where the second wake-up signal is used for waking up the terminal for PDCCH reception.

Optionally, the first wake-up signal is associated with target transmission, and the transmission indication information is used for the target transmission,
where the target transmission includes at least one of transmission with a specific priority and transmission with a specific configuration index.

Optionally, the first wake-up signal carries the transmission indication information by using at least one of the following:
reusing an existing information field in the first wake-up signal; and
adding a transmission indication information field.

Optionally, the first wake-up signal carries identity information of the terminal, or a data field of the first wake-up signal is scrambled by an RNTI associated with the terminal or a group common RNTI.

Optionally, the semi-persistent transmission includes at least one of the following:
semi-persistent scheduling transmission;
a scheduling request SR;
periodic channel state information CSI;
a periodic channel state information reference signal CSI-RS; and
a periodic sounding reference signal SRS.

Optionally, the semi-persistent scheduling transmission includes at least one of the following:
downlink semi-persistent scheduling DL SPS;
uplink configured grant type 2 type 2 CG; and
uplink configured grant type 1 type 1 CG.

The data transmission apparatus according to the embodiment of this application can implement each process implemented in the data transmission method embodiment according to the first aspect, and achieve the same technical effect. To avoid repetition, details are not described herein.

According to a fifth aspect, an embodiment of this application provides a wake-up signal monitoring apparatus. The apparatus is implemented by a terminal. As shown in FIG. 10, the wake-up signal monitoring apparatus 200 includes:
a second monitoring module 201, configured to monitor a wake-up signal during the running of a timer T319a.

Optionally, the apparatus further includes:
a third monitoring module, configured to perform at least one of the following:
the terminal resumes or starts physical downlink control channel PDCCH monitoring in a case that the terminal detects the wake-up signal; and
the terminal resumes or starts physical downlink control channel PDCCH monitoring in a case that the terminal detects the wake-up signal and the wake-up signal indicates waking up the terminal.

Optionally, a monitoring periodicity of the wake-up signal is less than or equal to a monitoring periodicity of a specific wake-up signal.

The wake-up signal monitoring apparatus according to the embodiment of this application can implement each process implemented in the wake-up signal monitoring method embodiment according to the second aspect, and achieve the same technical effect. To avoid repetition, details are not described herein.

According to a sixth aspect, an embodiment of this application provides another data transmission apparatus. The apparatus is implemented by a network side device. As shown in FIG. 11, the data transmission apparatus 300 includes:
a first sending module 301, configured to send a first wake-up signal, where the first wake-up signal carries transmission indication information,
where the transmission indication information includes at least one of the following:
   semi-persistent transmission indication information; and
   small data transmission indication information.

Optionally, the semi-persistent transmission indication information is used for indicating at least one of the following:
activation of semi-persistent transmission;
deactivation of the semi-persistent transmission;
suspension of the semi-persistent transmission; and
maintenance of the semi-persistent transmission.

Optionally, the small data transmission indication information is used for indicating at least one of the following:
triggering of small data transmission;
paging of the small data transmission;
starting of the small data transmission;
activation of the small data transmission; and
deactivation of the small data transmission.

Optionally, the transmission indication information includes at least the semi-persistent transmission indication information; and the apparatus further includes:
a second sending module, configured to send semi-persistent transmission configuration information.

Optionally, the semi-persistent transmission configuration information includes at least one of the following:
index information of the semi-persistent transmission;
time-frequency resource configuration information of the semi-persistent transmission;
priority information of the semi-persistent transmission; and
transmission parameter configuration information of the semi-persistent transmission.

Optionally, the transmission indication information includes at least the small data transmission indication information; and the apparatus further includes:
a third sending module, configured to send small data transmission configuration information.

Optionally, the transmission indication information further includes at least one of the following:
indication information of a transmission direction;
transmission configuration index information;
indication information of a transmission time-frequency resource; and
indication information of a transmission parameter.

Optionally, whether the transmission indication information is valid is indicated by at least one of the following:
indication information carried in the first wake-up signal and used for indicating whether the transmission indication information is valid; and
a target condition,
where the target condition includes at least one of the following:
   a data field of the first wake-up signal is scrambled by a specific radio network temporary identifier RNTI;
   a specific information field of the first wake-up signal is a specific value; and
   the first wake-up signal includes a specific sequence.

Optionally, in a case that the small data transmission indication information carried in the first wake-up signal indicates triggering the small data transmission, the apparatus further includes:
a first transmission module, configured to perform at least one of the following behaviors:
receiving at least one of a common control channel CCCH, a configured grant CG, and a random access channel RACH; and
sending at least one of a second wake-up signal, a physical downlink control channel PDCCH, and a physical downlink shared channel PDSCH,
where the second wake-up signal is used for waking up a terminal for PDCCH reception.

Optionally, the first wake-up signal is associated with target transmission, and the transmission indication information is used for the target transmission, where target semi-persistent transmission includes at least one of semi-persistent transmission with a specific priority and semi-persistent transmission with a specific configuration index.

Optionally, the first wake-up signal carries identity information of the terminal, or a data field of the first wake-up signal is scrambled by an RNTI associated with the terminal or a group common RNTI.

Optionally, the semi-persistent transmission includes at least one of the following:
semi-persistent scheduling transmission;
a scheduling request SR;
periodic channel state information CSI;
a periodic channel state information reference signal CSI-RS; and
a periodic sounding reference signal SRS.

Optionally, the semi-persistent scheduling transmission includes at least one of the following:
downlink semi-persistent scheduling DL SPS;
uplink configured grant type 2 type 2 CG; and
uplink configured grant type 1 type 1 CG.

The data transmission apparatus according to the embodiment of this application can implement each process implemented in the data transmission method embodiment according to the third aspect, and achieve the same technical effect. To avoid repetition, details are not described herein.

The data transmission apparatus and the wake-up signal monitoring apparatus according to the embodiments of this application each may be an electronic device, such as an electronic device with an operating system, or a component such as an integrated circuit or a chip in the electronic device. The electronic device may be a terminal or another device other than the terminal. For example, the terminal may include, but is not limited to, the types of the terminal 11 listed above, and the another device may be a server, a network attached storage (Network Attached Storage, NAS), or the like. This is not specifically limited in the embodiment of this application.

As shown in FIG. 12, an embodiment of this application further provides a communication device 1200, including a processor 1201 and a memory 1202. The memory 1202 stores a program or instructions runnable on the processor 1201. For example, when the communication device 1200 is a terminal, the program or instructions, when executed by the processor 1201, implement each step of the above-mentioned data transmission method embodiment or each step of the above-mentioned wake-up signal monitoring method embodiment, which can achieve the same technical effect. To avoid repetition, details are not described herein.

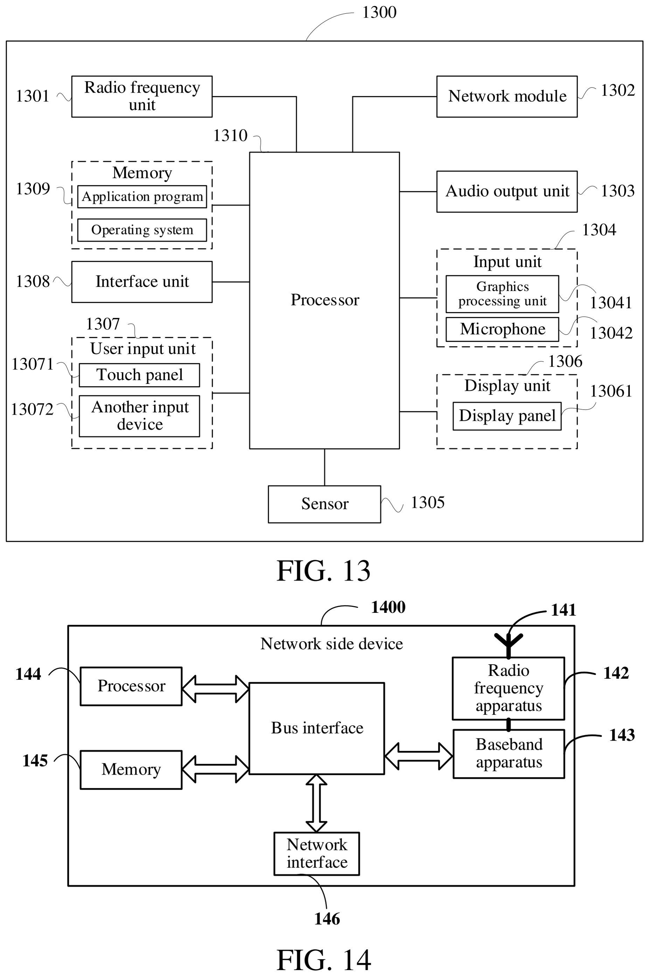

An embodiment of this application further provides a terminal, including a processor and a communication interface. The communication interface is coupled to the processor, and the processor is configured to run a program or instructions to implement the steps of the data transmission method embodiment according to the first aspect, or implement the steps of the wake-up signal monitoring method embodiment according to the second aspect. The terminal embodiment corresponds to the above-mentioned terminal side method embodiment, and each implementation process and implementation of the above-mentioned method embodiment can be applied to the terminal embodiment. This can achieve the same technical effect. Specifically, FIG. 13 is a schematic diagram of a hardware structure of a terminal according to an embodiment of this application.

The terminal 1300 includes, but is not limited to, at least some of the following components: a radio frequency unit 1301, a network module 1302, an audio output unit 1303, an input unit 1304, a sensor 1305, a display unit 1306, a user input unit 1307, an interface unit 1308, a memory 1309, and a processor 1310.

It may be understood by a person skilled in the art that the terminal 1300 may further include a power supply (such as a battery) for supplying power to various components. The power supply may be logically connected to the processor 1310 by using a power management system, so as to achieve charging, discharging, power consumption management and other functions by using the power management system. The terminal structure shown in FIG. 13 does not constitute a limitation on the terminal. The terminal may include more or fewer components than those shown, or combine some components, or have different component arrangements. Details are not described herein.

It should be understood that in the embodiment of this application, the input unit 1304 may include a graphics processing unit (Graphics Processing Unit, GPU) 13041 and a microphone 13042. The GPU 13041 processes image data of a still image or video that is obtained by an image acquisition apparatus (for example, a camera) in a video acquisition mode or an image acquisition mode. The display unit 1306 may include a display panel 13061, and the display panel 13061 may be configured in the form of a liquid crystal display, an organic light emitting diode, or the like. The user input unit 1307 includes at least one of a touch panel 13071 and another input device 13072. The touch panel 13071 is also referred to as a touchscreen. The touch panel 13071 may include two parts: a touch detection apparatus and a touch controller. The another input device 13072 may include, but is not limited to, a physical keyboard, a functional key (such as a volume control key or an on/off key), a track ball, a mouse, and a joystick. Details are not described herein.

In the embodiment of this application, after receiving downlink data from a network side device, the radio frequency unit 1301 may transmit the data to the processor 1310 for processing. In addition, the radio frequency unit 1301 may send uplink data to the network side device. Generally, the radio frequency unit 1301 includes, but is not limited to, an antenna, an amplifier, a transceiver, a coupler, a low noise amplifier, and a duplexer.

The memory 1309 may be configured to store a software program or instructions and various data. The memory 1309 may mainly include a first storage area for storing a program or instructions and a second storage area for storing data, where the first storage area may store an operating system, an application program or instructions required for at least one function (such as a sound playing function and an image playing function), and the like. In addition, the memory 1309 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1309 in the embodiment of this application includes, but is not limited to, these and any other suitable types of memories.

The processor 1310 may include one or more processing units. Optionally, the processor 1310 integrates an application processor and a modem processor, where the application processor mainly processes operations involving an operating system, a user interface, an application program, and the like, and the modem processor mainly processes wireless communication signals, such as a baseband processor. It may be understood that, the modem processor may alternatively not be integrated into the processor 1310.

An embodiment of this application further provides a network side device, including a processor and a communication interface. The communication interface is coupled to the processor, and the processor is configured to run a program or instructions to implement the steps of the data transmission method embodiment according to the third aspect. The network side device embodiment corresponds to the above-mentioned method embodiment for the network side device, and each implementation process and implementation of the above-mentioned method embodiment can be applied to the network side device embodiment. This can achieve the same technical effect.

Specifically, an embodiment of this application further provides a network side device. As shown in FIG. 14, a network side device 1400 includes an antenna 141, a radio frequency apparatus 142, a baseband apparatus 143, a processor 144, and a memory 145. The antenna 141 is connected to the radio frequency apparatus 142. In an uplink direction, the radio frequency apparatus 142 receives information through the antenna 141 and sends the received information to the baseband apparatus 143 for processing. In a downlink direction, the baseband apparatus 143 processes information to be sent and sends processed information to the radio frequency apparatus 142. The radio frequency apparatus 142 processes the received information and sends processed information through the antenna 141.

The method performed by the network side device in the above-mentioned embodiment may be implemented in the baseband apparatus 143. The baseband apparatus 143 includes a baseband processor.

For example, the baseband apparatus 143 may include at least one baseband board, and a plurality of chips are arranged on the baseband board. As shown in FIG. 14, one of the chips is, for example, a baseband processor, and is connected to the memory 145 through a bus interface, so as to invoke a program in the memory 145 to perform an operation of a network device shown in the above-mentioned method embodiment.

The network side device may further include a network interface 146. The interface is, for example, a common public radio interface (Common Public Radio Interface, CPRI).

Specifically, the network side device 1400 according to the embodiment of this application further includes: instructions or a program stored in the memory 145 and runnable on the processor 144. The processor 144 invokes the instructions or program in the memory 145 to perform the method performed by each module of the data transmission apparatus according to the sixth aspect, to achieve the same technical effect. To avoid repetition, details are not described herein.

An embodiment of this application further provides a readable storage medium. A program or instructions are stored on the readable storage medium. The program or the instructions, when executed by a processor, implement each process of the above-mentioned data transmission method embodiment or the above-mentioned wake-up signal monitoring method embodiment, which can achieve the same technical effect. To avoid repetition, details are not described herein.

The processor is the processor in the terminal in the above-mentioned embodiment. The readable storage medium includes a computer-readable storage medium, such as computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor, and the processor is configured to run a program or instructions to implement each process of the above-mentioned data transmission method embodiment or the above-mentioned wake-up signal monitoring method embodiment, which can achieve the same technical effect. To avoid repetition, details are not described herein.

It should be understood that the chip mentioned in the embodiment of this application may also be referred to as a system on chip, a system chip, a chip system, a system-on-a-chip, or the like.

An embodiment of this application further provides a computer program/program product. The computer program/program product is stored on a storage medium. The computer program/program product is executed by at least one processor to implement each process of the above-mentioned data transmission method embodiment or the above-mentioned wake-up signal monitoring method embodiment, which can achieve the same technical effect. To avoid repetition, details are not described herein.

It should be noted that terms "including", "comprising" or any other variants thereof are intended to cover non-exclusive inclusion, so that a process, a method, an article, or an apparatus including a series of elements includes not only those elements but also other elements not explicitly listed, or elements inherent to such a process, method, article, or apparatus. Without further limitation, an element defined by the phrase "including a ..." does not exclude the presence of an additional identical element in the process, method, article, or apparatus including the element. In addition, it should be noted that the scope of the method and apparatus in the implementations of this application is not limited to performing functions in the order shown or discussed, but also may include performing functions in a substantially simultaneous manner or in a reverse order according to the functions involved. For example, the described method may be performed in an order different from that described, and various steps may be further added, omitted or combined. In addition, features described with reference to some examples can be combined in other examples.

Through the description of the above-mentioned implementations, a person skilled in the art can clearly understand that the method in the above-mentioned embodiment can be implemented by a computer software product plus a necessary universal hardware platform, or certainly, can be implemented by hardware. The computer software product is stored in a storage medium (such as an ROM, an RAM, a magnetic disk, or an optical disc), including several instructions to cause a terminal or a network side device to perform the method according to each of the embodiments of this application.

The embodiments of this application are described above with reference to the accompanying drawings, but this application is not limited to the specific implementations described above, and the specific implementations described above are merely illustrative and not restrictive. A person of ordinary skill in the art may further make implementations in many forms under the teaching of this application without departing from the purpose of this application and the protection scope of the claims, and these implementations all fall within the protection scope of this application.

## Claims

1. A data transmission method, comprising:
monitoring, by a terminal, a first wake-up signal, wherein the first wake-up signal carries transmission indication information; and
performing, by the terminal, a corresponding transmission behavior according to the transmission indication information,
wherein the transmission indication information comprises at least one of the following:
semi-persistent transmission indication information; and
small data transmission indication information.

2. The method according to claim 1, wherein the semi-persistent transmission indication information is used for indicating at least one of the following:
activation of semi-persistent transmission;
deactivation of the semi-persistent transmission;
suspension of the semi-persistent transmission; and
maintenance of the semi-persistent transmission.

3. The method according to claim 1, wherein the small data transmission indication information is used for indicating at least one of the following:
triggering of small data transmission;
paging of the small data transmission;
starting of the small data transmission;
activation of the small data transmission; and
deactivation of the small data transmission.

4. The method according to claim 1 or 2, wherein the transmission indication information comprises at least the semi-persistent transmission indication information; and before the monitoring, by a terminal, a first wake-up signal, the method further comprises:
obtaining, by the terminal, semi-persistent transmission configuration information.

5. The method according to claim 4, wherein the semi-persistent transmission configuration information comprises at least one of the following:
index information of the semi-persistent transmission;
time-frequency resource configuration information of the semi-persistent transmission;
priority information of the semi-persistent transmission; and
transmission parameter configuration information of the semi-persistent transmission.

6. The method according to claim 1 or 3, wherein the transmission indication information comprises at least the small data transmission indication information; and before the monitoring, by a terminal, a first wake-up signal, the method further comprises:
obtaining, by the terminal, small data transmission configuration information.

7. The method according to any one of claims 1 to 6, wherein the transmission indication information further comprises at least one of the following:
indication information of a transmission direction;
transmission configuration index information;
indication information of a transmission time-frequency resource; and
indication information of a transmission parameter.

8. The method according to any one of claims 1 to 7, wherein the performing, by the terminal, a corresponding transmission behavior according to the transmission indication information comprises:
performing, by the terminal, the corresponding transmission behavior according to the transmission indication information in a case that the transmission indication information is valid.

9. The method according to claim 8, further comprising:
performing, by the terminal, a default terminal behavior in a case that the transmission indication information is invalid, wherein the default terminal behavior comprises at least one of the following:
maintaining the semi-persistent transmission;
suspending the semi-persistent transmission;
activating the semi-persistent transmission;
deactivating the semi-persistent transmission;
skipping starting the small data transmission; and
skipping triggering the small data transmission.

10. The method according to claim 8 or 9, further comprising: determining, by the terminal, whether the transmission indication information is valid according to at least one of the following:
indication information carried in the first wake-up signal and used for indicating whether the transmission indication information is valid; and
a target condition,
wherein the target condition comprises at least one of the following:
a data field of the first wake-up signal is scrambled by a specific radio network temporary identifier RNTI;
a specific information field of the first wake-up signal is a specific value; and
the first wake-up signal comprises a specific sequence.

11. The method according to any one of claims 1 to 10, wherein the performing, by the terminal, a corresponding transmission behavior according to the transmission indication information comprises:
performing, by the terminal, at least one of the following behaviors in a case that the terminal detects the first wake-up signal, and the small data transmission indication information carried in the first wake-up signal indicates triggering the small data transmission:
sending at least one of a common control channel CCCH, a configured grant CG, and a random access channel RACH;
starting a timer T319a; and
starting downlink reception of at least one of a second wake-up signal, a physical downlink control channel PDCCH, and a physical downlink shared channel PDSCH,
wherein the second wake-up signal is used for waking up the terminal for PDCCH reception.

12. The method according to any one of claims 1 to 11, wherein the first wake-up signal is associated with target transmission, and the transmission indication information is used for the target transmission,
wherein the target transmission comprises at least one of transmission with a specific priority and transmission with a specific configuration index.

13. The method according to any one of claims 1 to 12, wherein the first wake-up signal carries the transmission indication information by using at least one of the following:
reusing an existing information field in the first wake-up signal; and
adding a transmission indication information field.

14. The method according to any one of claims 1 to 13, wherein the first wake-up signal carries identity information of the terminal, or a data field of the first wake-up signal is scrambled by an RNTI associated with the terminal or a group common RNTI.

15. The method according to any one of claims 1 to 14, wherein the semi-persistent transmission comprises at least one of the following:
semi-persistent scheduling transmission;
a scheduling request SR;
periodic channel state information CSI;
a periodic channel state information reference signal CSI-RS; and
a periodic sounding reference signal SRS.

16. The method according to any one of claims 1 to 15, wherein the semi-persistent scheduling transmission comprises at least one of the following:
downlink semi-persistent scheduling DL SPS;
uplink configured grant type 2 type 2 CG; and
uplink configured grant type 1 type 1 CG.

17. A wake-up signal monitoring method, comprising:
monitoring, by a terminal, a wake-up signal during the running of a timer T319a.

18. The method according to claim 17, further comprising at least one of the following:
resuming or starting, by the terminal, physical downlink control channel PDCCH monitoring in a case that the terminal detects the wake-up signal; and
resuming or starting, by the terminal, physical downlink control channel PDCCH monitoring in a case that the terminal detects the wake-up signal and the wake-up signal indicates waking up the terminal.

19. The method according to claim 17 or 18, wherein a monitoring periodicity of the wake-up signal is less than or equal to a monitoring periodicity of a specific wake-up signal.

20. A data transmission method, comprising:
sending, by a network side device, a first wake-up signal, wherein the first wake-up signal carries transmission indication information,
wherein the transmission indication information comprises at least one of the following:
semi-persistent transmission indication information; and
small data transmission indication information.

21. The method according to claim 20, wherein the semi-persistent transmission indication information is used for indicating at least one of the following:
activation of semi-persistent transmission;
deactivation of the semi-persistent transmission;
suspension of the semi-persistent transmission; and
maintenance of the semi-persistent transmission.

22. The method according to claim 20, wherein the small data transmission indication information is used for indicating at least one of the following:
triggering of small data transmission;
paging of the small data transmission;
starting of the small data transmission;
activation of the small data transmission; and
deactivation of the small data transmission.

23. The method according to claim 20 or 21, wherein the transmission indication information comprises at least the semi-persistent transmission indication information; and the method further comprises:
sending, by the network side device, semi-persistent transmission configuration information.

24. The method according to claim 23, wherein the semi-persistent transmission configuration information comprises at least one of the following:
index information of the semi-persistent transmission;
time-frequency resource configuration information of the semi-persistent transmission;
priority information of the semi-persistent transmission; and
transmission parameter configuration information of the semi-persistent transmission.

25. The method according to claim 20 or 22, wherein the transmission indication information comprises at least the small data transmission indication information; and the method further comprises:
sending, by the network side device, small data transmission configuration information.

26. The method according to any one of claims 20 to 25, wherein the transmission indication information further comprises at least one of the following:
indication information of a transmission direction;
transmission configuration index information;
indication information of a transmission time-frequency resource; and
indication information of a transmission parameter.

27. The method according to any one of claims 20 to 26, wherein whether the transmission indication information is valid is indicated by at least one of the following:
indication information carried in the first wake-up signal and used for indicating whether the transmission indication information is valid; and
a target condition,
wherein the target condition comprises at least one of the following:
a data field of the first wake-up signal is scrambled by a specific radio network temporary identifier RNTI;
a specific information field of the first wake-up signal is a specific value; and
the first wake-up signal comprises a specific sequence.

28. The method according to any one of claims 20 to 27, wherein in a case that the small data transmission indication information carried in the first wake-up signal indicates triggering the small data transmission, the network side device performs at least one of the following behaviors:
receiving at least one of a common control channel CCCH, a configured grant CG, and a random access channel RACH; and
sending at least one of a second wake-up signal, a physical downlink control channel PDCCH, and a physical downlink shared channel PDSCH,
wherein the second wake-up signal is used for waking up a terminal for PDCCH reception.

29. The method according to any one of claims 20 to 28, wherein the first wake-up signal is associated with target transmission, and the transmission indication information is used for the target transmission, wherein target semi-persistent transmission comprises at least one of semi-persistent transmission with a specific priority and semi-persistent transmission with a specific configuration index.

30. The method according to any one of claims 20 to 29, wherein the first wake-up signal carries identity information of the terminal, or a data field of the first wake-up signal is scrambled by an RNTI associated with the terminal or a group common RNTI.

31. The method according to any one of claims 20 to 30, wherein the semi-persistent transmission comprises at least one of the following:
semi-persistent scheduling transmission;
a scheduling request SR;
periodic channel state information CSI;
a periodic channel state information reference signal CSI-RS; and
a periodic sounding reference signal SRS.

32. The method according to any one of claims 20 to 31, wherein the semi-persistent scheduling transmission comprises at least one of the following:
downlink semi-persistent scheduling DL SPS;
uplink configured grant type 2 type 2 CG; and
uplink configured grant type 1 type 1 CG.

33. A data transmission apparatus, comprising:
a first monitoring module, configured to monitor a first wake-up signal, wherein the first wake-up signal carries transmission indication information; and
a first execution module, configured to perform a corresponding transmission behavior according to the transmission indication information,
wherein the transmission indication information comprises at least one of the following:
semi-persistent transmission indication information; and
small data transmission indication information.

34. A wake-up signal monitoring apparatus, wherein the apparatus comprises:
a second monitoring module, configured to monitor a wake-up signal during the running of a timer T319a.

35. A data transmission apparatus, comprising:
a first sending module, configured to send a first wake-up signal, wherein the first wake-up signal carries transmission indication information,
wherein the transmission indication information comprises at least one of the following:
semi-persistent transmission indication information; and
small data transmission indication information.

36. A terminal, comprising a processor and a memory, wherein the memory stores a program or instructions runnable on the processor, and the program or the instructions, when executed by the processor, implement the steps of the data transmission method according to any one of claims 1 to 16 or the steps of the wake-up signal monitoring method according to any one of claims 17 to 19.

37. A network side device, comprising a processor and a memory, wherein the memory stores a program or instructions runnable on the processor, and the program or the instructions, when executed by the processor, implement the steps of the data transmission method according to any one of claims 20 to 32.

38. A readable storage medium, wherein the readable storage medium stores a program or instructions, and the program or the instructions, when executed by a processor, implement the steps of the data transmission method according to any one of claims 1 to 16, or implement the steps of the wake-up signal monitoring method according to any one of claims 17 to 19, or implement the steps of the data transmission method according to any one of claims 20 to 32.

39. A chip, comprising a processor and a communication interface, wherein the communication interface is coupled to the processor, and the processor is configured to run a programs or instructions to implement the steps of the data transmission method according to any one of claims 1 to 16, or implement the steps of the wake-up signal monitoring method according to any one of claims 17 to 19, or implement the steps of the data transmission method according to any one of claims 20 to 32.

40. A computer program product, wherein the program product is stored in a non-volatile storage medium, and the program product is executed by at least one processor, to implement the steps of the data transmission method according to any one of claims 1 to 16, or implement the steps of the wake-up signal monitoring method according to any one of claims 17 to 19, or implement the steps of the data transmission method according to any one of claims 20 to 32.

41. An electronic device, wherein the electronic device is configured to perform the steps of the data transmission method according to any one of claims 1 to 16, or implement the steps of the wake-up signal monitoring method according to any one of claims 17 to 19, or implement the steps of the data transmission method according to any one of claims 20 to 32.
